# EUROPEAN PATENT APPLICATION

(11) **EP 2 610 158 A1**
(43) Date of publication of application: **03.07.2013**
(21) Application number: 11195866.6
(22) Date of filing: 28.12.2011
(51) Int. Cl.: B62M 3/08

(54) **Pedal adaptor for a bicycle pedal**

(71) Applicant: Happel, Glen, 2960 Rungsted Kyst (DK); Happel, Cecilie M., 1319 København K (DK); Riber, Sven, 3070 Snekkersten (DK); Jakobsen, Ole, 1561 København K (DK)
(72) Inventor: Happel, Glen, 2960 Rungsted Kyst (DK); Happel, Cecilie, 1319 København K (DK)
(74) Representative: Kjerrumgaard, Lars Bo

(57) **Abstract**

The present invention concerns a pedal adaptor for a bicycle pedal (30) comprising a) a flexible soft coating means (40) having a first and a second surface (44,42) substantially opposite each other, a first and second end (46,48) and a first and a second side, wherein the first surface (44) faces the pedal and the second surface (42) is in a position to receive a human foot, optionally wearing a human shoe, when the adaptor is mounted on the bicycle pedal (30), wherein the second surface has sufficient friction to avoid sliding of the human foot when the foot is placed on the pedal adaptor when it is mounted on the pedals, and wherein the flexible soft coating means (40) extends around the pedal (30) when the adaptor is fixed on the bicycle pedal, and b) fastening means (10) for mounting the flexible soft coating means (40) to the pedal (30); wherein said flexible soft coating means is connected to the fastening means.

## Description

### FIELD OF THE INVENTION

The present invention relates to a pedal adaptor for a bicycle pedal and a pedal of a bicycle comprising the pedal adaptor of the present invention. Furthermore the present invention relates to a bicycle comprising the pedal of a bicycle comprising the pedal adaptor of the present invention.

### BACKGROUND OF THE INVENTION

The traditional bicycles with pedals, such as normal standard bicycles, mountain bicycles, racing bicycles and other traditional bicycles, are widely used around the world. Bicycles today usually have a mounted pedal which may be a traditional citybike pedal, mountain bikepedal or racing bike pedal. Pedals such as mountain bikepedals or racing bike pedals are not meant for use with bare feet or traditional shoes such as business shoes, high heel shoes and leather shoes and care should be taken when riding e.g a mountain bike with bare feet or a racing bike with leather shoes or high heels since the feet or the shoes may be disrupted or shoes may slide of the bike during cycling with leather shoes or high heel shoes and this may cause danger in traffic. US patent 3,859,867 discloses a solution to riding a bike with bare feet wherein a sleeve means is removably adapted to enclose the pedal to protect the bare feet of the user, however, this solution does not provide protection from the situation of riding a bike in traffic with high heel shoes which may still slide or the sleeve may rotate and fall of which may create dangerous situations in the traffic. Moreover, this sleeve cannot be tightened around the pedal to avoid the above dangerous traffic situations, because it has no fastening means

### SUMMARY OF THE INVENTION

The present invention concerns a new type of pedal adaptors which are safe to use with bare feet and shoes, such as high heel shoes or leather shoes, and prevents disruption of the bare feet or the shoes.

In a broad aspect the present invention relates to a pedal adaptor for a bicycle pedal comprising
a) a flexible soft coating means having a first and a second surface substantially opposite each other, a first and second end and a first and a second side, wherein the first surface faces the pedal and the second surface is in a position to receive a human foot, optionally wearing a human shoe, when the adaptor is mounted on the bicycle pedal, wherein the second surface has sufficient friction to avoid sliding of the human foot when the foot is placed on the pedal adaptor when it is mounted on the pedals, and wherein the flexible soft coating means extends around the pedal when the adaptor is mounted on the bicycle pedal, and
b) fastening means for mounting the flexible soft coating means to the pedal; wherein said flexible soft coating means is connected to the fastening means.

In a further aspect of the present invention relates to a pedal adaptor for a bicycle pedal comprising
a) a flexible soft coating means formed by a continuous band for surrounding the pedal having a first and a second surface substantially opposite each other, and a first opening for receiving the pedal and a second opening opposite of the first opening, wherein the first surface faces the pedal and the second surface is in a position to receive a human foot, optionally wearing a human shoe, when the adaptor is fixed to the bicycle pedal, wherein the second surface has sufficient friction to avoid sliding of the human foot when the foot is placed on the pedal adaptor when it is fixed to the pedals,
b) a stopping means fixed to the first surface at the second opening of the continuous band so as to prevent the pedal from sliding through the continuous band, and
c) fastening means connected to the first or second surface at the first opening of the continuous band for fixing the flexible soft coating means to the pedal.

In a still further aspect the present invention relates to a pedal of a bicycle comprising a pedal adaptor of the present invention.

In a further aspect the present invention relates to a bicycle comprising the pedal of a bicycle comprising a pedal adaptor of the present invention.

Further objects and advantages of the present invention are that the pedal adaptor of the present invention can be fixed and tightened to a bicycle pedal through the fastening means which is connected to the soft coating means, the pedal adaptor of the present invention cannot slip of the pedal and is at the same time easy to mount and demount, and the flexible soft coating means, if made of a very soft material, forms after the specific shoe, e.g. high heel shoes and makes bike riding more safe and stable.

### DESCRIPTION OF THE INVENTION

The present invention concerns a new type of pedal adaptors which are safe to use with bare feet and shoes, such as high heel shoes or leather shoes, and prevents disruption of the bare feet or the shoes. Accordingly, in a broad aspect the present invention relates to a pedal adaptor for a bicycle pedal comprising
a) a flexible soft coating means having a first and a second surface substantially opposite each other, a first and second end and a first and a second side, wherein the first surface faces the pedal and the second surface is in a position to receive a human foot, optionally wearing a human shoe, when the adaptor is mounted on the bicycle pedal, wherein the second surface has sufficient friction to avoid sliding of the human foot when the foot is placed on the pedal adaptor when it is mounted on the pedals, and wherein the flexible soft coating means extends around the pedal when the adaptor is mounted on the bicycle pedal, and
b) fastening means for mounting the flexible soft coating means to the pedal; wherein said flexible soft coating means is connected to the fastening means.

This fastening means when mounted, tightened and secured on the pedal ensures that the flexible soft coating means stays in place on the pedal without moving or rotating.

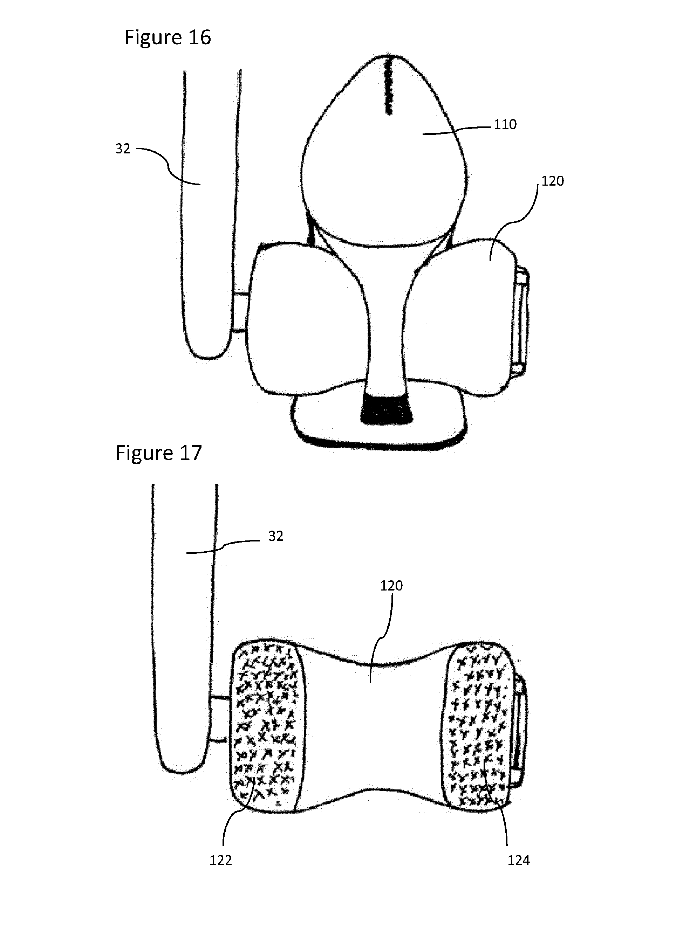

In order to ride safely on a bike the pedals usually have reflectors which may be an integrated part of the pedal. However, when the pedal adaptor of the present invention are correctly positioned on the pedal it might cover such reflectors, and to safeguard the person riding the bike the pedal adaptor may have a reflector means, such as reflector strips. Typically there are two reflector strips which are fixed to the second surface in such a position that when the foot is correctly placed on the pedal adaptor the reflector means are visible on the sides of the adaptor. A typical embodiment is illustrated in figure 17.

The flexible soft coating means may be connected to the fastening means by suitable means such as sewing, gluing, or both. Typically, the flexible soft coating means is in one piece, such as made of foam rubber, which is sewed or glued to the fastening means. However, the flexible soft coating means may also comprise more than one piece, such as 2-4 pieces, e.g. two pieces connected by an elastic band.

The flexible soft coating means is preferably made of a material which is sufficiently elastic or bendable to be formed and tightened around a pedal without creating sharp edges or uncomfortable curves. Typically the flexible soft coating means is made of rubbers or elastic materials. Examples of such rubbers or elastic materials may without limitation be selected from natural rubber, styrene butadiene rubber, nitril butadiene rubber, chloroprene rubber, ethylene propylene rubber, isobutylene isoprene rubber, silicon rubber, neoprene, polyurethane, flour rubber, hypalon, flour silicone, epichlorohydrin, PVC. Typically, flexible soft coating means is made of foam rubber which has the advantage that it will accommodate the feet or shoes because of its softness.

The second surface of the flexible soft coating means may be smooth or may have protruding means. Such protruding means will make it easier to ride a bike with normal flat shoes or leather shoes with no or only a small heel, since they will create sufficient friction and avoid sliding of the shoes. Typically, such protruding means are selected from ribbed, e.g. waved or curved, or dotted means. When the second surface is smooth it has sufficient friction to avoid sliding of the human foot when the foot is placed on the pedal adaptor when it is mounted on the pedals and a typical material of the flexible soft coating means in this respect is foam rubber.

As used herein "a human foot" is intended to mean a bare foot or feet, as well as a foot or feet wearing a human shoe. When the human foot is a bare foot the flexible soft coating means is typically smooth and made of foam rubber.

In a further embodiment the human foot is wearing a shoe such as a female shoe with high heels. Typically, the flexible soft coating means is made of foam rubber which is suitable for the female shoe with high heels.

In a still further embodiment the human foot is wearing a shoe such as a male shoe, e.g. a leather shoe. The shoe may also be a sports shoe such as tennis shoes or soccer shoes in which case both the flexible soft coating means made of e.g. foam rubber as well as rubber with protruding means is suitable.

Further advantages of the pedal adaptor of the present invention is that it can be used with any shoe or bare feet and the pedal may without limitation be selected from a pedal for a standard bike, a pedal for a mountain bike, and a pedal for a racing bike, such as a Shimano pedal.

When riding a bike with a pedal for a racing bike, such as a Shimano pedal, the pedal adaptor may be more difficult to place around such pedal and in this respect a further adaptor, herein referred to as a pre-adaptor, should be placed on the pedal in order to create a pedal with a shape that resembles the pedal for a standard bike. Basically, the pre-adaptor may have various shapes as long as the pedal adaptor of the present invention can be mounted on the pedal incl pre-adaptor without creating tensions, or edges or the like that makes it uncomfortable to ride the bike. Once the pre-adaptor is in place on the racing bike pedal (or any bicycle pedal of a different shape than a standard bicycle pedal for a normal citybike or the like) the pedal adaptor can easily be fixed to this pedal. Alternatively, the pedal adaptor of the present invention comprises a pre-adaptor shaped to receive the pedal adaptor and is an integrated part of the pedal adaptor of the present invention.

The pedal adaptor of the present invention has connected to it a fastening means which fastening means when mounted, tightened and secured on the pedal ensures that the flexible soft coating means stays in place on the pedal without moving or rotating. Different and various forms of fastening means are available and in one embodiment the fastening means comprises
a) a pocket means open at one end and designed to substantially match and receive the pedal, and wherein a side of the pocket means is connected to the flexible soft coating means, optionally through a short band, and
b) an elongated band extending from the opening of the pocket means and having a terminal part, wherein the terminal part comprises two elongated bands which are sufficiently long to able to be placed on each side of a pedal arm and fixed to the pocket means so as to enclose the pedal. This will ensure a tightened basis or support for the flexible soft coating means. Moreover, the pocket means may have a rubber band facing the pedal, such as a rubber band with protruding means, such as ribbed means or means shaped like dots (dot means).

In a further embodiment the fastening means comprises
a) a first elongated band, such as a textile band, having a first end connected to the flexible soft coating means and a second end fixed to a circular body, wherein the first band extends from the first end through the circular body so as to form a coating or sleeve, and
b) a second elongated band fixed to the first band and extending substantially perpendicular from the first band and having a terminal part, wherein the terminal part comprises two elongated bands which are sufficiently long to able to be placed on each side of a pedal arm and fixed to the first band so as to enclose the pedal. This will ensure a tightened basis or support for the flexible soft coating means. Moreover, the first band may have a rubber band facing the pedal, such as a rubber band with protruding means, such as ribbed means or dot means.

As used herein "fixing" or "fixed" is intended to mean any suitable way of linking to materials together, such as without limitation the use of Velcro, fasteners, reels, snaps, buttons, sewing, glue, etc, typically Velcro is used for all fixing purposes.

Sometimes it may be appropriate to reinforce the flexible soft coating means as such material may be too week in itself when mounted on the pedal and may break or be disrupted due to e.g. wearing. Thus, in an embodiment reinforcement means are fixed to the first surface. In a further embodiment the fastening means may be the reinforcement and the flexible soft coating means is supported by the fastening means. The fastening means may be made of any flexible material such as textiles or nylon materials or the like.

As mentioned above the fastening means may be connected to the flexible soft coating means by using the fastening means as support or the fastening means and the flexible soft coating means may be connected by sewing or gluing the two means together. Furthermore, the fastening means may also be an integrated part of the flexible soft coating means, meaning that flexible soft coating means and fastening means is provided as one material.

A similar solution to the pedal adaptor as described above is a pedal adaptor wherein the flexible soft coating means is circular and can be mounted on the pedal as such. Thus, a further aspect of the present invention relates to a pedal adaptor for a bicycle pedal comprising
a) a flexible soft coating means formed by a continuous band for surrounding the pedal having a first and a second surface substantially opposite each other, and a first opening for receiving the pedal and a second opening opposite of the first opening, wherein the first surface faces the pedal and the second surface is in a position to receive a human foot, optionally wearing a human shoe, when the adaptor is fixed to the bicycle pedal, wherein the second surface has sufficient friction to avoid sliding of the human foot when the foot is placed on the pedal adaptor when it is fixed to the pedals,
b) a stopping means fixed to the first surface at the second opening of the continuous band so as to prevent the pedal from sliding through the continuous band, and
c) fastening means connected to the first or second surface at the first opening of the continuous band for fixing the flexible soft coating means to the pedal.

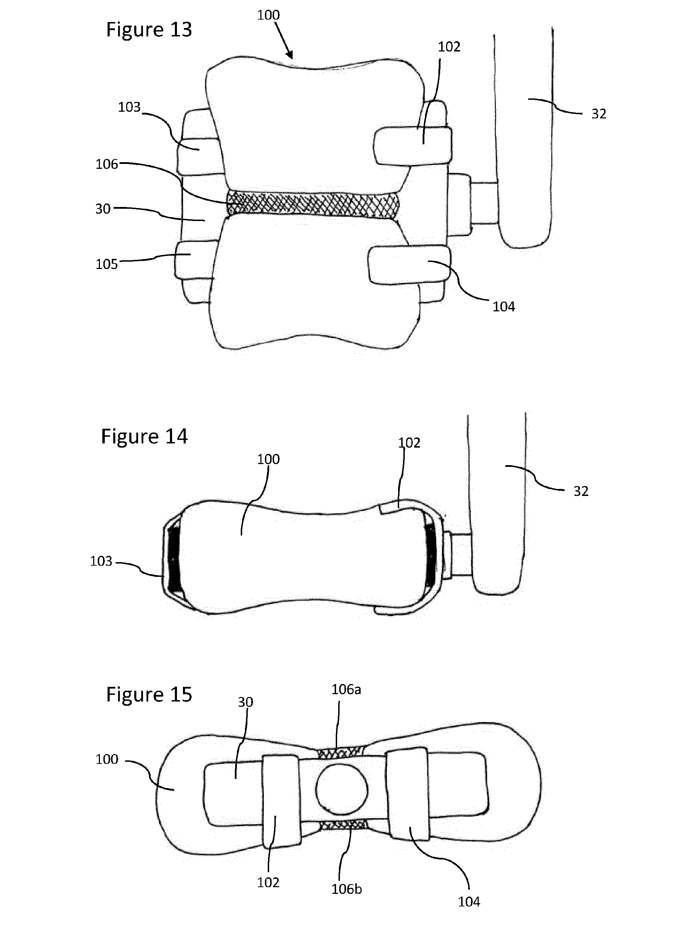

The stopping means may be of any suitable material such as nylon or textile and may consist of one or more bands, e.g. two bands as illustrated in figure 13. Such stopping means are usually not stretchable or only a little stretchable in order to ensure a tightened mounting on the pedal.

In a further embodiment the fastening means comprises an elongated band connected to the first or second surface at the first opening of the continuous band and which elongated band is sufficiently long to able to be placed around the pedal at the pedal arm end and fixed to the second surface of the flexible soft coating means so as to enclose the pedal. As used herein the "pedal arm end" means the end part of the arm whereto the pedal is connected.

The continuous band can be made of the same material as the flexible soft coating means such as rubbers or elastic materials. Examples of such rubbers or elastic materials may without limitation be selected from natural rubber, styrene butadiene rubber, nitril butadiene rubber, chloroprene rubber, ethylene propylene rubber, isobutylene isoprene rubber, silicon rubber, neoprene, polyurethane, flour rubber, hypalon, flour silicone, epichlorohydrin, PVC. Typically, continuous band is made of foam rubber which has the advantage that it will accommodate the feet or shoes because of its softness.

In a further aspect the present invention relates to a pedal of a bicycle comprising a pedal adaptor of the present invention.

In a still further aspect the present invention relates to a bicycle comprising the pedal of a bicycle comprising a pedal adaptor of the present invention.

### DRAWINGS

The invention will now be described more fully with reference to the appended drawings illustrating preferred embodiments of the new pedal adaptor.

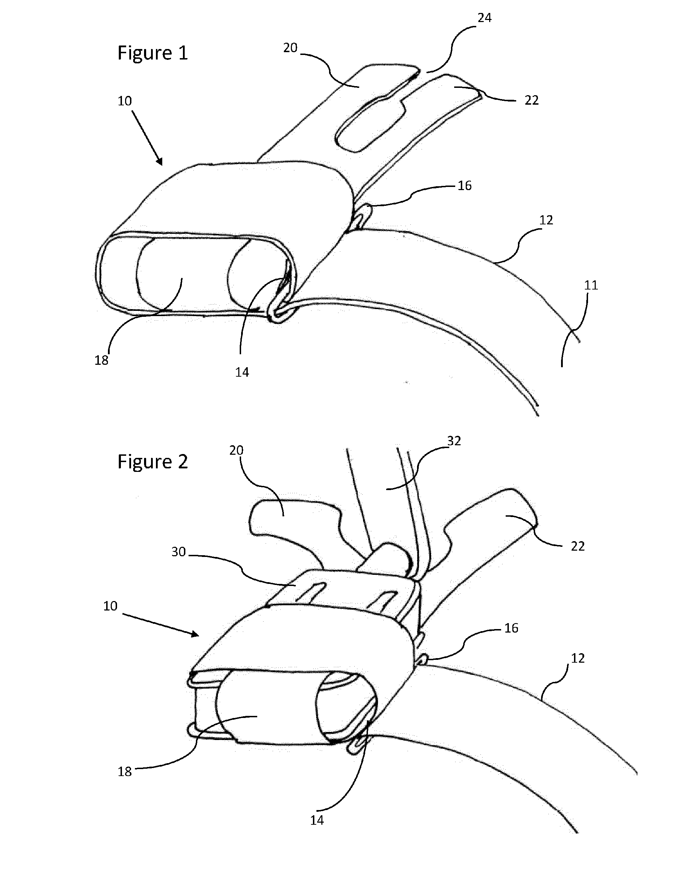

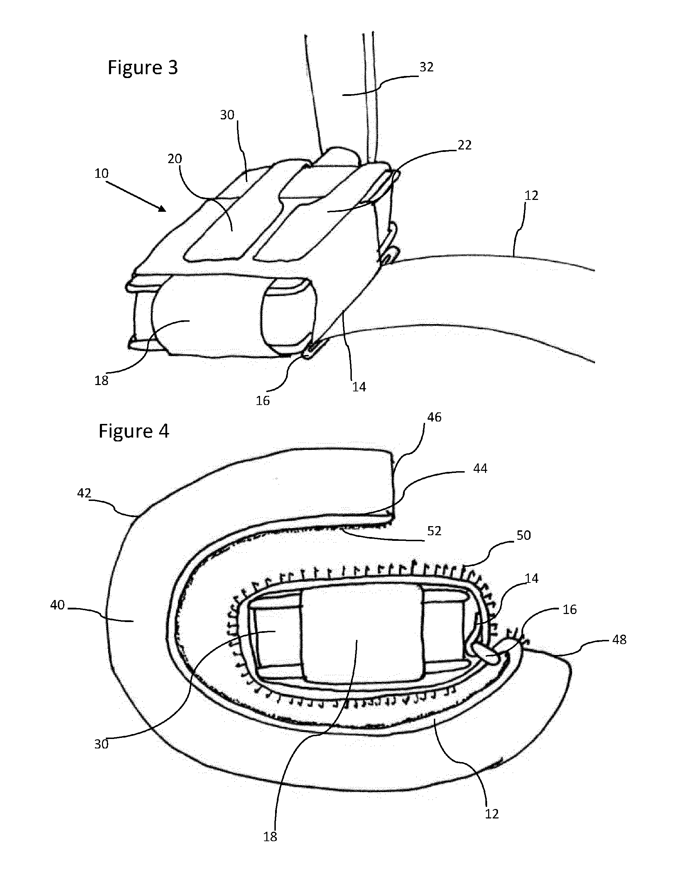

Figure 1 illustrates an embodiment of a part of the pedal adaptor of the present invention wherein the fastening means 10 is shown. The fastening means 10 comprises a first elongated band 12, such as a textile band, having a first end part 11 connected to the flexible soft coating means (not shown) and a second end 14 fixed to a circular body 16. The flexible soft coating means may be connected to any part of the end part 11 which end part 11 extends from the circular body 16 and have a suitable length so that the flexible soft coating means may be connected thereto in a secure manner. The circular body 16 can be made of various materials, such as plastics and metal alloys, e.g. brass, and is here shaped rectangular although this is not intended to be limiting in any way. The first band 12 extends from the first end 11 through the circular body 16 hereby forming a coating or sleeve. The coating or sleeve can be mounted on the pedal (not shown) and by means of pulling the first end 11, the coating will be closed around the pedal and tightened. The fastening means 10 also comprises a second elongated band 18 fixed to the first band 12. The second band 18 is typically fixed to the first band 12 such as by glue or sewing although the use of Velcro is also a possibility. The second band 18 extends perpendicular from the first band 12 and has a terminal part 24 wherein the terminal part has two elongated bands 20 and 22 which are sufficiently long to able to be placed around a pedal arm (not shown) of the pedal and fixed to the first band 12 (not shown) so as to enclose the pedal (not shown). The flexible soft coating means is connected to the end part 11 of the first band 12, however for sake of simplicity this is not shown on this figure, but e.g. on figure 4.

Figure 2 further illustrates the fastening means 10 of figure 1 wherein a pedal 30 connected to the pedal arm 32 is receiving the fastening means 10. The first band 12 and the second end 14 fixed to the circular body 16 is placed in a closed position around the pedal as described in figure 1. The second elongated band 18, which is fixed to the first band 12 is placed along the pedal 30 towards the pedal arm 32. As illustrated the terminal part bands 20 and 22 should be placed on each side of the pedal arm 32 and can from this position be fixed to the first band 12 thereby enclosing the pedal.

Figure 3 further illustrates the fastening means 10 as decribed in figure 1 and 2. Here the terminal bands 20 and 22 are placed on each side of the pedal arm 32 and fixed to the first band 12 thereby enclosing the pedal. The fastening means 10 now secures the positioning of the flexible soft coating means so that no rotation or side movements are possible and the flexible soft coating means can be safely secured and closed around the pedal.

Figure 4 is a side view of the pedal 30 and the fastening means 10 as explained above under figure 1, 2 and 3 is secured tight to the pedal. The flexible soft coating means 40 is connected to the end part 11 of the first band 12 such as by means of sewing or glue. The flexible soft coating means 40 has a first end 46 forming the terminal part of the flexible soft coating means and a second end 48 which may terminate close to the circular body 16, although it may terminate before reaching the circular body if this is considered more convenient. The flexible soft coating means 40 has a first surface 44 and a second surface 42 substantially opposite each other, wherein the first surface 44 faces the pedal and is connected to the first band 12. The first band 12 is here illustrated with velcro means 50 and 52 which when brought together secures the flexible soft coating means 40 to the pedal 30.

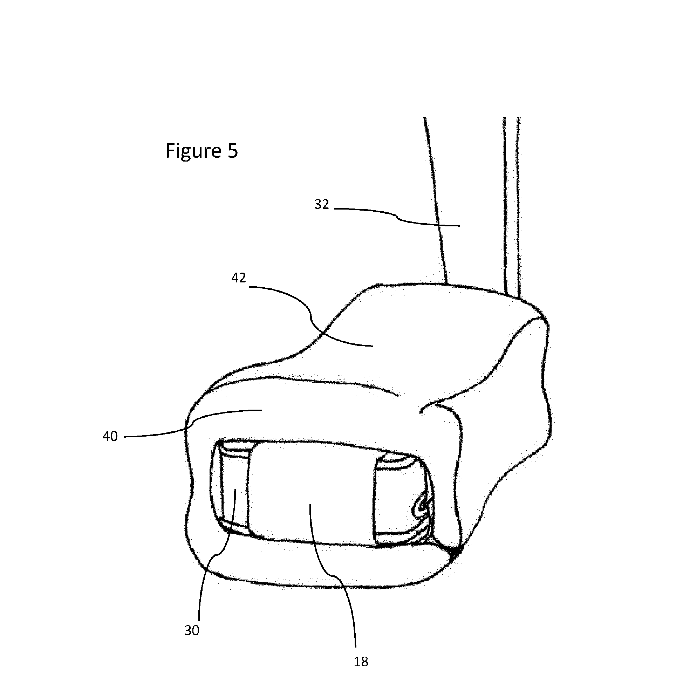

Figure 5 illustrates the situation where the flexible soft coating means 40 is secured to the pedal 30. The second surface 42 is ready to receive a human foot, in particular a human shoe, such as a female high heel shoe and thereby avoid destruction of the shoe or injuries to the bare foot.

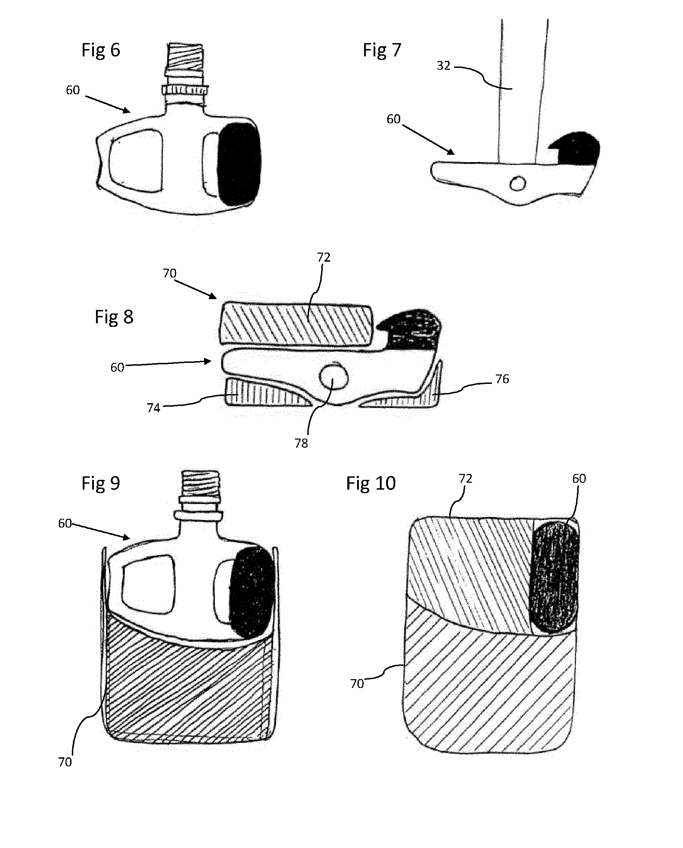

Figure 6 and 7 illustrates a racing bike pedal 60 of the Shimano type as is known from the prior art such as US 7,430,941 and EP 1340674. In figure 7 the pedal 60 is seen from the side when connected to the arm 32.

Figure 8 illustrates a further embodiment of an additional pre-adaptor part 70 of the pedal adaptor of the present invention when the pedal 60 is seen from the side where the means 78 to be connected to a pedal arm is shown. The pre-adaptor shaped to receive the pedal adaptor is in one piece 70 which when seen from this view comprises three bodies 72, 74 and 76 which supports the pedal 60 and creates a pedal like shape which mimics a normal standard pedal. The adaptor piece 70 is typically made of a plast-like or rubber-like material (although it could also be a metal shape or a wooden shape) with a sufficient hardness to support the pedal adaptor of the present invention. The present pedal adaptor may then be placed as explained above in relation to figures 1-5 or alternatively the pre-adaptor is made an integral part of the pedal adaptor of the present invention.

Figure 9 illustrates the pre-adaptor part 70 in another embodiment where the pedal 60 has received the pre-adaptor 70 which do not have supporting body 74 and 76.

Figure 10 illustrates the pre-adaptor part 70 having a supporting body 72 seen from the top of the pedal 60.

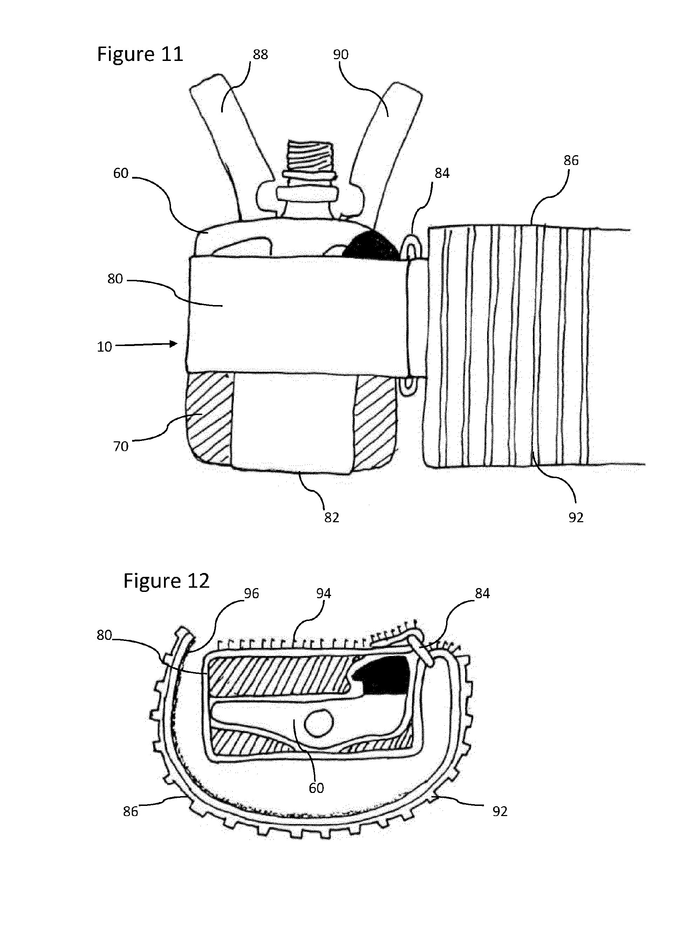

Figure 11 illustrates a further embodiment of the pedal adaptor of the present invention wherein the pedal is a racing bike pedal of the Shimano-type 60 having a pre-adaptor 70 as described above in figures 8-10. The fastening means 10 comprises a first elongated band 80, having a first end part (not shown) connected to the flexible soft coating means 86 and a second end (not shown) fixed to a circular body 84. The fastening means 10 is similar as described in figure 1-3, and the second band 82 extends perpendicular from the first band 80 and the corresponding terminal part has two elongated bands 88 (corresponding to 20 in figure 1) and 90 (corresponding to 22 in figure 1) which are to be fixed on the first elongated band 80 in the same manner as described in figure 1-3; however, the flexible soft coating means 86 which is connected to any part of the end part of the first band 80 has a different shape. The flexible soft coating means 86 has on its second surface as seen in figure 11 protruding means 92, here shown as ribbed means 92.

Figure 12 is a side view of the embodiment shown in figure 11 seen from the arm side (arm not shown) wherein the flexible soft coating 86 is formed around the pre-adaptor 70, 72, 74 76 (cf. figure 8), although this embodiment of the pedal adaptor may also be placed on a normal pedal as illustrated in figures 1-3. The protruding means 92 of the flexible soft coating means 86 will avoid sliding of a human shoe when placed in position and secured to the pedal. The flexible soft coating means 86 is here illustrated with Velcro means 94 and 96 which when brought in connection will fix the flexible soft coating means 86 to the first band 80 of the fastening means 10.

Figure 13 illustrates an embodiment of the pedal adaptor of the present invention seen from the top wherein the flexible soft coating means 100 is formed by a continuous band, wherein the flexible soft coating means 100 consists of two pieces connected by an elastic band 106 (only one shown). The flexible soft coating means 100 has a first and second opening (not shown) wherein the first opening is drawn over the pedal 30 thereby surrounding the pedal 30 in a tight and secure manner. The pedal adaptor of the present invention comprises fastening means 103, 105 which are fixed to the flexible soft coating means 100 on the inner surface (not shown) in such a way as to create a stopping means, such as a pocket, which prevents the pedal from sliding through the flexible soft coating means 100. The pedal adaptor of the present invention also comprises fastening means 102, 104 for fixing the flexible soft coating means to the pedal 30; wherein said flexible soft coating means 100 is connected to the fastening means 102, 104. In this embodiment the fastening means 102, 104 comprises two elongated bands fixed (not shown) to the flexible soft coating means 100 on the first opening facing the pedal arm side. The elongated bands 102, 104 are sufficiently long to able to be placed around the pedal 30 at the pedal arm 32 end and fixed to the flexible soft coating means 100, e.g by Velcro or buttons, so as to enclose and be secured to the pedal 30.

Figure 14 shows the same embodiment of the pedal adaptor as illustrated in figure 13 seen from the side wherein the flexible soft coating means 100 is in the fixed position on the pedal 30 and one of the elongated band 102 extending from one side of the first opening and around the pedal 30 at the pedal arm 32 end is shown in the fixed position to the surface of the flexible soft coating means 100, so as to enclose and be secured to the pedal 30. Also illustrated is the fastening means 103 which is fixed to the flexible soft coating means 100 on the inner surface at the second opening so as to create a stopping means as explained above in figure 13.

Figure 15 shows the same embodiment of the pedal adaptor as illustrated in figure 13 and 14 seen from the end where the pedal arm (32 in figure 14) is connected to the pedal 30 (also the first opening of the flexible soft coating means 100 which is opposite to the second opening). As seen the flexible soft coating means 100 consist of two parts connected by elastic means 106a, 106b. In this embodiment the fastening means 102, 104 comprises two elongated bands 102, 104 fixed to the flexible soft coating means 100 and extending from the second opening.

Figure 16 illustrates the pedal adaptor of the present invention where a female shoe 110 with high heel is placed in bicycle position on the pedal adaptor 120. The flexible soft coating means of the pedal adaptor 120 may for instance be selected from the flexible soft coating means as shown in figures 4-5 or figures 13-15. When the high heel shoe 110 is placed on the pedal adaptor 120 the usual disruption of the sole which sole is typically convex is avoided completely and furthermore the pedal adaptor also makes it more safe to ride a bike with e.g. high heels.

Figure 17 illustrates the pedal adaptor 120 of the present invention. The flexible soft coating means of the pedal adaptor 120 may for instance be selected from the flexible soft coating means as shown in figures 4-5 or figures 13-15. Here is illustrated a further embodiment wherein two reflector strips 122, 124 are fixed to the second surface of the flexible soft coating means in such a position that when the foot or shoe is correctly placed on the pedal adaptor 120 the reflector means 122, 124 are visible on the sides of the adaptor.

All references, including publications, patent applications and patents, cited herein are hereby incorporated by reference to the same extent as if each reference was individually and specifically indicated to be incorporated by reference and was set forth in its entirety herein.

All headings and sub-headings are used herein for convenience only and should not be construed as limiting the invention in any way.

Any combination of the above-described elements in all possible variations thereof is encompassed by the invention unless otherwise indicated herein or otherwise clearly contradicted by context.

Recitation of ranges of values herein are merely intended to serve as a shorth method of referring individually to each separate value falling within the range, unless other-wise indicated herein, and each separate value is incorporated into the specification as if it were individually recited herein. Unless otherwise stated, all exact values provided herein are representative of corresponding approximate values (*e.g.,* all exact exemplary values provided with respect to a particular factor or measurement can be considered to also provide a corresponding approximate measurement, modified by "about," where appropriate).

All methods described herein can be performed in any suitable order unless other-wise indicated herein or otherwise clearly contradicted by context.

The terms "a" and "an" and "the" and similar referents as used in the context of de-scribing the invention are to be construed to cover both the singular and the plural, unless otherwise indicated herein or clearly contradicted by context.

The use of any and all examples, or exemplary language (*e.g.,* "such as") provided herein, is intended merely to better illuminate the invention and does not pose a limitation on the scope of the invention unless otherwise indicated. No language in the specification should be construed as indicating any element is essential to the practice of the invention unless as much is explicitly stated.

The citation and incorporation of patent documents herein is done for convenience only and does not reflect any view of the validity, patentability and/or enforceability of such patent documents.

The description herein of any aspect or embodiment of the invention using terms such as "comprising", "having", "including" or "containing" with reference to an element or elements is intended to provide support for a similar aspect or embodiment of the invention that "consists of", "consists essentially of", or "substantially comprises" that particular element or elements, unless otherwise stated or clearly contradicted by context (*e.g.,* a composition described herein as comprising a particular element should be understood as also describing a composition consisting of that element, unless otherwise stated or clearly contradicted by context).

This invention includes all modifications and equivalents of the subject matter re-cited in the aspects or claims presented herein to the maximum extent permitted by applicable law.

The features disclosed in the foregoing description may, both separately and in any combination thereof, be material for realizing the invention in diverse forms thereof.

## Claims

1. A pedal adaptor for a bicycle pedal comprising
a) a flexible soft coating means having a first and a second surface substantially opposite each other, a first and second end and a first and a second side, wherein the first surface faces the pedal and the second surface is in a position to receive a human foot, optionally wearing a human shoe, when the adaptor is mounted on the bicycle pedal, wherein the second surface has sufficient friction to avoid sliding of the human foot when the foot is placed on the pedal adaptor when it is mounted on the pedals, and wherein the flexible soft coating means extends around the pedal when the adaptor is fixed on the bicycle pedal, and
b) fastening means for mounting the flexible soft coating means to the pedal; wherein said flexible soft coating means is connected to the fastening means.

2. The pedal adaptor of claim 1 wherein a reflector means, such as two reflector strips, is/are fixed to the second surface in such a position that when the foot is correctly placed on the pedal adaptor the reflector means are visible on the side(s) of the adaptor.

3. The pedal adaptor of any one of claims 1-2 wherein the flexible soft coating means is made of rubber or elastomers, such as natural rubber, styrene butadiene rubber, nitril butadiene rubber, chloroprene rubber, ethylene propylene rubber, isobutylene isoprene rubber, silicon rubber, neoprene, polyurethane, flour rubber, hypalon, flour silicone, epichlorohydrin, PVC. Typically foam rubber

4. The pedal adaptor of any one of claims 1-3 wherein the second surface has protruding means, such as ribbed means.

5. The pedal adaptor of any one of claims 1-4 wherein the human shoe is a female shoe with high heels.

6. The pedal adaptor of any one of claims 1-5 wherein the human shoe is a male shoe.

7. The pedal adaptor of any one of claims 1-6 wherein the pedal is selected from a pedal for a standard bike, a pedal for a mountain bike, and a pedal for a racing bike.

8. The pedal adaptor of claim 7 wherein the pedal is selected from a pedal for a racing bike, such as a Shimano pedal, and the pedal adaptor further comprising a pre-adaptor shaped to receive the pedal adaptor of any one of claims 1-7.

9. The pedal adaptor of any one of claims 1-8 wherein the fastening means comprises
a) a pocket means open at one end and designed to substantially match and receive the pedal, and wherein a side of the pocket means is connected to the flexible soft coating means, optionally through a short band, and
b) an elongated band extending from the opening of the pocket means and having a terminal part, wherein the terminal part comprises two elongated bands which are sufficiently long to able to be placed on each side of a pedal arm and fixed to the pocket means so as to enclose the pedal.

10. The pedal adaptor of any one of claims 1-9 wherein the fastening means comprises
a) a first elongated band, such as a textile band, having a first end connected to the flexible soft coating means and a second end fixed to a circular body, wherein the first band extends from the first end through the circular body so as to form a coating or sleeve, and
b) a second elongated band fixed to the first band and extending substantially perpendicular from the first band and having a terminal part, wherein the terminal part comprises two elongated bands which are sufficiently long to able to be placed on each side of a pedal arm and fixed to the first band so as to enclose the pedal.

11. The pedal adaptor of any one of claims 1-10 wherein the means of fixing is selected from Velcro, fasteners, reels, snaps, buttons, sewing, glue, etc, typically Velcro is used for all fixing purposes.

12. The pedal adaptor of any one of claims 1-11 wherein reinforcement means are fixed to the first surface.

13. The pedal adaptor of any one of claims 1-12 wherein the fastening means are an integrated part of the flexible soft coating means.

14. A pedal adaptor for a bicycle pedal comprising
a) a flexible soft coating means formed by a continuous band for surrounding the pedal having a first and a second surface substantially opposite each other, and a first opening for receiving the pedal and a second opening opposite of the first opening, wherein the first surface faces the pedal and the second surface is in a position to receive a human foot, optionally wearing a human shoe, when the adaptor is mounted on the bicycle pedal, wherein the second surface has sufficient friction to avoid sliding of the human foot when the foot is placed on the pedal adaptor when it is mounted on the pedals,
b) a stopping means fixed to the first surface at the second opening of the continuous band so as to prevent the pedal from sliding through the continuous band, and
c) fastening means connected to the first or second surface at the first opening of the continuous band for mounting the flexible soft coating means to the pedal.

15. The pedal adaptor of claim 14 wherein the fastening means comprises an elongated band connected to the first or second surface at the first opening of the continuous band and which elongated band is sufficiently long to able to be placed around the pedal at the pedal arm end and fixed to the second surface of the flexible soft coating means so as to enclose the pedal.
